# EUROPÄISCHE PATENTANMELDUNG

(11) **EP 3 333 138 A1**
(43) Veröffentlichungstag der Anmeldung: **13.06.2018**
(21) Anmeldenummer: 16202481.4
(22) Anmeldetag: 06.12.2016
(51) Int. Cl.: C04B 28/02, C04B 40/00

(54) **FLÜSSIGES ZUSATZMITTEL FÜR SCHNELLE BELEGREIFE VON ZEMENTESTRICHEN**

(71) Anmelder: Sika Technology AG, 6340 Baar (CH)
(72) Erfinder: Burkhard Müller, 71254 Ditzingen-Heimerdingen (DE)
(74) Vertreter: Sika Patent Attorneys

(57) **Zusammenfassung**

Die Erfindung betrifft ein Estrichzusatzmittel, umfassend a) ein oder mehrere Fliessmittel, b) einen oder mehrere Luftporenbildner und c) mindestens eine Aminverbindung, die ein oder mehrere Hydroxygruppen aufweist.

Durch Verwendung des Estrichzusatzmittels in einem Estrich wird eine beschleunigte Trocknung und Belegreife des Estrichs und auch eine gesteigerte Festigkeit ermöglicht.

## Beschreibung

### Technisches Gebiet

Die Erfindung betrifft ein Additiv für Zement enthaltende Baustoffe, insbesondere ein Additiv zur Herstellung von konventionellem Zementestrich.

### Stand der Technik

Konventionelle Estrichsysteme basieren in der Regel auf Zement als anorganischem Bindemittel. Eine neuere Entwicklung aus den 1970er Jahren sind sogenannte Fliessestriche, die im Wesentlichen auf Anhydrit als anorganischem Bindemittel basieren. Die Fliessestriche sind körperlich deutlich leichter als konventionelle Estriche zu verarbeiten. Trotz anderslautender Prognosen hat sich aber keine massive Verschiebung vom Einsatz konventioneller Estriche hin zum Einsatz von Fliessestrichen ergeben.

Die Gründe für die Verlegung von konventionellem Estrich sind vielfältig. Ein entscheidender Punkt ist der hohe Preis von Fliessestrichen und auch der Einsatz von Baustellensilos mit aufwendiger Mischtechnik. Die Verarbeitung hat sich in den vergangenen Jahren nicht verändert. Die Innovationen sind auf den Gebiet der flüssigen Estrichzusatzmittel zu beobachten.

Primäres Ziel war die Reduktion des Wasseranspruchs und damit die Verkürzung der Belegreife. Die Verwendung von Fliessmitteln reduziert zwar den Wasseranspruch, jedoch wird dadurch der Estrich schwer und kaum noch zu verarbeiten. Die Zugabe von Luftporenbildnern ist daher unerlässlich. Die Art der Luftporen ist für die Leichtgängigkeit des Estrichs sehr wichtig. Kleine Luftporen verbessern die Verarbeitbarkeit (pumpen, verteilen, verdichten und glätten).

Die Verwendung von Estrichzusatzmitteln, die auf Fliessmittel in Kombination mit Luftporenmitteln basieren, hat den Wasseranspruch und den Zementgehalt reduziert. Die Estriche sind heute deutlich früher belegreif. So ist es möglich durch Wasserreduktion und einem offenen Porensystem auf die benötigte Restfeuchten von nicht mehr als 2,0 Massen-% nach 14 Tagen im Estrich zu kommen.

Werden schnellere Systeme benötigt, verwendet man bisher die Kombination Tonerdezement, Portlandzement und Sulfat-Träger. Solche Systeme sind schon nach 24 h belegreif (kleiner gleich 2,0 Massen-% Feuchte). Für die Verarbeitung sind diese schnellen Systeme aber eine Herausforderung, da die Verarbeitungsspanne normalerweise max. 30 Min. beträgt. Es muss sehr schnell und präzise gearbeitet werden. Ausserdem sind diese Systeme sehr teuer. Sie werden daher nur in Sonderfällen eingesetzt (max. 1 % aller Baustellen).

Auf dem Markt besteht insbesondere ein Bedarf nach einer Belegreife erst nach 3 Tagen bei normaler Verarbeitungszeit. Von viel grösserer Bedeutung sind daher Estrichsysteme für das Segment "Belegreife nach 3 bis 7 Tagen" bei nur gering höheren Kosten für das Zusatzmittel bzw. der Gesamtkosten.

### Darstellung der Erfindung

Die Aufgabe der Erfindung bestand daher in der Entwicklung eines Estrichzusatzmittels, dass zu einem leichtgängigen Estrich führt, schnell belegreif ist und hohe Festigkeiten aufweist. Das Estrichzusatzmittel soll für den Einsatz konventioneller Estriche auf Zementbasis geeignet sein.

Überraschenderweise wurde festgestellt, dass bei konventionellen Estrichsystemen die Belegreife nach 3 Tagen bei normaler Verarbeitungszeit erreicht werden kann, indem man einen Austrocknungsbeschleuniger in Form von Alkanolamin als zusätzliche Komponente in ein Estrichzusatzmittel auf Basis von Fliessmittel und Luftporenbildner gibt. Ein Estrich gilt als belegreif, wenn die Restfeuchte im Estrich kleiner 2,0 Massen-% ist.

Die Erfindung betrifft daher ein Estrichzusatzmittel, umfassend
a) ein oder mehrere Fliessmittel,
b) einen oder mehrere Luftporenbildner und
c) mindestens eine Aminverbindung, die ein oder mehrere Hydroxygruppen aufweist.

Durch den Einsatz des Estrichzusatzmittels in einem konventionellen Zementestrich ist eine normale Verarbeitung mit einer schnellen Belegreife von 3 Tagen möglich, wobei der Einsatz von kostengünstigen Rohstoffen erfolgen kann. Mit diesem Estrichzusatzmittel ist es somit möglich einen Estrich herzustellen, der mehrere vorteilhafte Eigenschaften in sich vereinigt:
- Belegreife schon nach 3 Tagen (üblich sind 28 d)
- Endfestigkeiten auch nach 3 Tagen
- Preiswerter Estrich, da als Bindemittel Portlandzement verwendet werden kann (schnelle Estriche enthalten normaler Weise teuren Tonerdezement).

Die Erfindung betrifft ferner ein Verfahren zur Herstellung eines Zementestrichs, umfassend a) das Mischen von Komponenten umfassend Zement, Gesteinskörnung, Wasser und das erfindungsgemässe Estrichzusatzmittel, um eine Estrichmischung zu erhalten, b) Verteilen der Estrichmischung in die gewünschte Form und c) Härten der Estrichmischung.

Die Erfindung betrifft ferner die Verwendung des erfindungsgemässen Estrichzusatzmittels in einer Zement und Wasser enthaltenden Mischung als Trocknungsbeschleuniger oder als Beschleuniger für die Belegreife des aus der Mischung erhaltenen Zementprodukts, insbesondere eines Estrichs. Die Erfindung betrifft auch die Verwendung des erfindungsgemässen Estrichzusatzmittels in einer Zement und Wasser enthaltenden Mischung als Erhärtungsbeschleuniger, d.h. zur Steigerung der Festigkeit des aus der Mischung erhaltenen Zementprodukts, insbesondere eines Estrichs.

Bevorzugte Ausführungsformen der Erfindung sind in den abhängigen Ansprüchen und der nachfolgenden ausführlichen Erläuterung der Erfindung ausgeführt.

### Weg zur Ausführung der Erfindung

Ein erster Aspekt der Erfindung ist ein Estrichzusatzmittel, umfassend
a) ein oder mehrere Fliessmittel,
b) einen oder mehrere Luftporenbildner und
c) mindestens eine Aminverbindung, die ein oder mehrere Hydroxygruppen aufweist.

Das Estrichzusatzmittel umfasst ferner gegebenenfalls d) Wasser. Es ist bevorzugt, dass das Estrichzusatzmittel Wasser enthält. Dies verbessert unter anderem die Dosierbarkeit und Handhabbarkeit des Zusatzmittels. Das Estrichzusatzmittel ist daher bevorzugt ein flüssiges Estrichzusatzmittel.

Das Estrichzusatzmittel kann auch als trockenes Produkt oder Pulver ohne Zugabe von Wasser vorliegen, dies ist aber weniger bevorzugt. Wenn das Estrichzusatzmittel als trockenes Produkt oder Pulver vorliegt, kann es wie es ist zu einer Zement enthaltenden Mischung zugegeben werden.

Die in dem Estrichzusatzmittel enthaltenen Fliessmittel und Luftporenbildner sind dem Fachmann auf dem Gebiet der Bauchemie als Zusatzmittel für Systeme auf Basis anorganischer Bindemittel, insbesondere Zement, wohlbekannt. Fliessmittel sind bauchemische Zusatzmittel, die eine starke Verflüssigung bzw. Konsistenzverbesserung von Zementmischungen bewirken und dadurch eine Wassereinsparung ermöglichen. Durch den Einsatz von Luftporenbildner werden Luftporen im Zementleim gebildet, die auch während des Mischens und Verdichtens stabil bleiben und eine verbesserte Verarbeitbarkeit bewirken.

Das Estrichzusatzmittel enthält ein oder mehrere Fliessmittel. Es können die üblicherweise eingesetzten Fliessmittel verwendet werden. Das Fliessmittel wird z.B. ausgewählt aus Lignosulfonaten, Naphthalinsulfonsäure-Formaldehyd-Kondensatharzen, Melamin-/Naphthalinsulfonaten, Melamin-Formaldehyd-Sulfit-Kondensatharzen, Polycarboxylatethern oder Mischungen davon, wobei Naphthalinsulfonsäure-Formaldehyd-Kondensatharze, Melamin-/Naphthalinsulfonate, Melamin-Formaldehyd-Sulfit-Kondensatharze, Polycarboxylatether oder Mischungen davon bevorzugt sind.

Das Fliessmittel ist besonders bevorzugt ein oder mehrere Polycarboxylatether. Der Polycarboxylatether ist insbesondere ein Kammpolymer, welches über einen Polycarboxylatrückgrat und Polyetherseitenketten verfügt, wobei die Polyetherseitenketten bevorzugt über Ester-, Ether- und/oder Amidgruppen an das Polycarboxylatrückgrat gebunden sind.

Geeignete Polycarboxylatether werden unter anderem von Sika Schweiz AG unter der Handelsnamenreihe ViscoCrete® kommerziell vertrieben.

Ein bevorzugter Polycarboxylatether umfasst insbesondere folgende Teilstruktureinheiten oder besteht daraus:
a) a Molanteile einer Teilstruktureinheit **S1** der Formel (I) 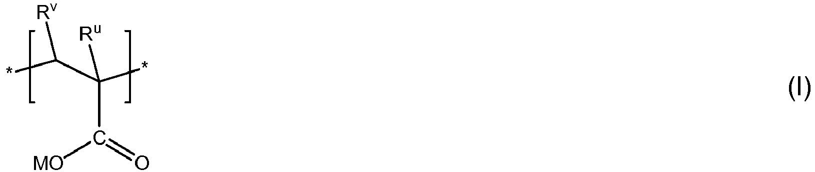
b) b Molanteile einer Teilstruktureinheit **S2** der Formel (II) 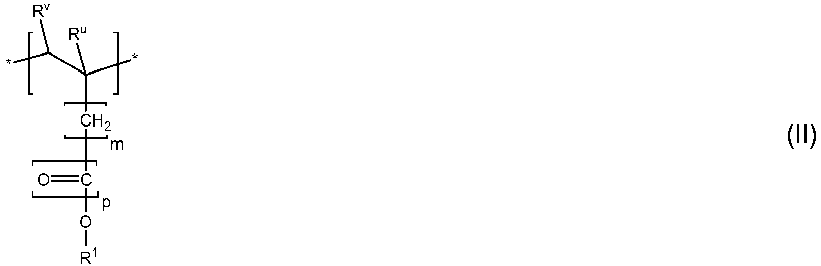
c) c Molanteile einer Teilstruktureinheit **S3** der Formel (**III**) 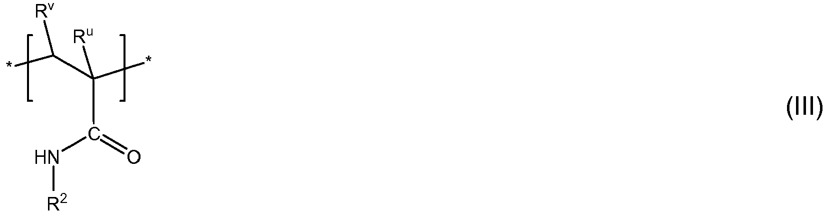
d) d Molanteile einer Teilstruktureinheit **S4** der Formel (IV) 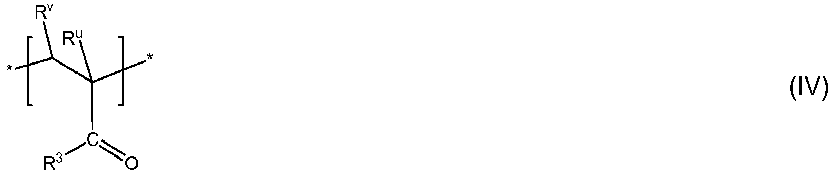 wobei
   M unabhängig voneinander H⁺, ein Alkalimetallion, Erdalkalimetallion, ein zwei oder dreiwertiges Metallion, ein Ammoniumion oder eine organische Ammoniumgruppe darstellt,
   jedes R^{u} unabhängig von den anderen für Wasserstoff oder eine Methylgruppe steht,
   jedes R^{v} unabhängig von den anderen für Wasserstoff oder COOM steht,
   m = 0, 1 oder 2 ist,
   p = 0 oder 1 ist,
   R¹ und R² unabhängig voneinander für eine C₁- bis C₂₀-Alkylgruppe, -Cycloalkylgruppe, -Alkylarylgruppe oder für -[AO]ₙ-R⁴ steht, wobei A = C₂- bis C₄-Alkylen, R⁴ für H, eine C₁- bis C₂₀-Alkylgruppe, -Cyclohexylgruppe oder -Alkylarylgruppe steht, und n = 2 - 250,
   R³ unabhängig voneinander für NH₂, -NR⁵R⁶, -OR⁷NR⁸R⁹ steht,
      wobei R⁵ und R⁶ unabhängig voneinander für eine C₁- bis C₂₀-Alkylgruppe, -Cycloalkylgruppe, -Alkylarylgruppe oder-Arylgruppe stehen, oder für eine Hydroxyalkylgruppe oder für eine Acetoxyethyl- (CH₃-CO-O-CH₂-CH₂-) oder eine Hydroxy-isopropyl- (HO-CH(CH₃)-CH₂-) oder eine Acetoxyisopropylgruppe (CH₃-CO-O-CH(CH₃)-CH₂-) stehen; oder R⁵ und R⁶ zusammen einen Ring bilden, von dem der Stickstoff ein Teil ist, um einen Morpholin- oder Imidazolinring aufzubauen;
   R⁷ eine C₂ -C₄-Alkylengruppe ist,
   R⁸ und R⁹ je unabhängig voneinander eine C₁- bis C₂₀-Alkylgruppe, -Cycloalkylgruppe, -Alkylarygruppe, -Arylgruppe oder eine Hydroxyalkylgruppe darstellen, und
   wobei a, b, c und d Molanteile der jeweiligen Teilstruktureinheiten **S1, S2, S3** und **S4** darstellen, mit
      a/b/c/d = (0,1 - 0,9) / (0,1 - 0,9) / (0 - 0,8) / (0 - 0,8),
      insbesondere a/b/c/d = (0,3 - 0,9) / (0,1 - 0,7) / (0 - 0,6) / (0 - 0,4),
      bevorzugt a/b/c/d = (0,5 - 0,8) / (0,2 - 0,4) / (0,001 - 0,005) / 0
      und mit der Massgabe, dass a + b + c + d = 1 ist.

Die Abfolge der Teilstruktureinheiten **S1**, **S2**, **S3** und **S4** kann alternierend, blockartig oder zufällig sein. Prinzipiell ist es auch möglich, dass zusätzlich zu den Teilstruktureinheiten **S1**, **S2**, **S3** und **S4** weitere Struktureinheiten vorliegen. Bevorzugt weisen die Teilstruktureinheiten **S1**, **S2**, **S3**, und **S4** zusammen einen Gewichtsanteil von wenigstens 50 Gew.-%, insbesondere wenigstens 90 Gew.-%, besonders bevorzugt wenigstens 95 Gew.-%, am Gesamtgewicht des Kammpolymers auf. Gemäss einer weiteren vorteilhaften Ausführungsform ist das Kammpolymer insbesondere frei von aromatischen Verbindungen und/oder aromatischen Struktureinheiten.

Ein gewichtsgemitteltes Molekulargewicht (M_{w}) des Kammpolymers beträgt bevorzugt 5'000 - 150'000 g/mol, bevorzugter 10'000 - 100'000 g/mol. Die Herstellung der Kammpolymere ist dem Fachmann an sich bekannt und kann beispielsweise durch radikalische Polymerisation oder durch polymer-analoge Umsetzung erfolgen.

Ganz besonders geeignet sind Kammpolymere wobei
a) der Rest R^{v} für Wasserstoff steht,
b) der Rest R^{u} für Wasserstoff oder für eine Methylgruppe oder für eine Mischung aus einer Methylgruppe und Wasserstoff steht. In letzterem Fall, beträgt ein Molverhältnis der Methylgruppe zum Wasserstoff insbesondere 25:75 - 75:25, insbesondere 40:60 - 60:40.
c) m = 0 ist,
d) p = 1 ist,
e) R¹, jeweils unabhängig voneinander, für -[AO]ₙ-R⁴ mit n = 20 - 70 und A = C₂-Alkylen steht,
f) R², jeweils unabhängig voneinander, für -[AO]ₙ-R⁴, wobei A insbesondere für eine Mischung aus C₂- und C₃-Alkylen steht, R⁴ mit Vorteil eine Methylgruppe darstellt und insbesondere n = 20 - 70 ist. Ein gewichtsgemitteltes Molekulargewicht der Gruppe -[AO]ₙ-R⁴ beträgt dabei mit Vorteil 1'000 - 3'000 g/mol. Ein Molverhältnis der C₂-Alkyleneinheiten zu den C₃-Alkyleneinheiten beträgt insbesondere 25:75 - 75:25, insbesondere 40:60 - 60:40.
g) R⁴ eine Methylgruppe darstellt und/oder
h) a/b/c/d = (0,5 - 0,8) / (0,2 - 0,4) / (0,001 - 0,005) / 0.

Das Estrichzusatzmittel umfasst ferner einen oder mehrere Luftporenbildner. Es können die im Stand der Technik bekannten Luftporenbildner eingesetzt werden. Der Luftporenbildner ist z.B. ausgewählt aus Tensiden, Harzseifen oder Mischungen davon, wobei der Luftporenbildner bevorzugt ein Tensid ist.

Als Harzseifen sind insbesondere Seifen natürlicher Harze, wie z.B. Tallöl, Balsamharz oder Wurzelharz, sowie Derivate davon, z.B. Maleinsäureaddukte, geeignet. Die Harzseifen können durch Verseifung der natürlichen Harze mit Basen, wie z.B. Alkalihydroxiden, hergestellt werden.

Das Tensid kann z.B. ein anionisches, kationisches, nichtionisches, amphoteres oder zwitterionisches Tensid oder eine Mischung dieser Tenside sein. Eine Vielzahl von Tensiden unterschiedlicher Strukturtypen ist für den Einsatz als Luftporenbildner bekannt und im Handel erhältlich. Alle diese Tenside können für die Erfindung verwendet werden.

Als Luftporenbilder eignen sich z.B. Produkttypen der Reihe Sitren Airvoid^{®} von Evonik Industries wie Sitren Airvoid^{®}601 (Mischung anionischer Tenside), der Reihe Berol^{®} von AkzoNobel wie Berol^{®}175 (nichtionisches Tensid auf Basis von primären Alkoholen natürlichen Ursprungs), der Reihe Texapon^{®} von BASF wie Texapon^{®} NSO (Natriumlaurylethersulfat-Lösung, 27%) oder der Reihe Hansanyl^{®} von der Hansa Group AG wie Hansanyl^{®} OS (Natriumolefin (C14-16)sulfonat, 37%). Hierbei handelt es um rein veranschaulichende Beispiele, es können ohne weiteres auch andere Tenside als Luftporenbildner eingesetzt werden.

Das Estrichzusatzmittel enthält ferner mindestens eine Aminverbindung, die ein oder mehrere Hydroxygruppen aufweist. Die Aminverbindung weist z.B. eine, zwei, drei, vier oder mehr Hydroxygruppen auf. Die Aminverbindung weist bevorzugt zwei oder drei, besonders bevorzugt drei Hydroxygruppen auf. Die Aminverbindung ist bevorzugt eine Monoaminverbindung, es kann aber auch eine Aminverbindung mit zwei, drei oder mehr Amingruppen sein.

Die mindestens eine Aminverbindung ist bevorzugt ausgewählt aus einem oder mehreren Monoalkanolaminen, einem oder mehreren Dialkanolaminen, einem oder mehreren Trialkanolaminen oder Mischungen davon, wobei insbesondere solche der folgenden allgemeinen Struktur geeignet sind:

R¹ₐN(R²OH)_{b}

wobei R¹ unabhängig voneinander Wasserstoff oder einwertiges C₁₋₆-Alkyl, bevorzugt C₁₋₄-Alkyl, insbesondere Methyl oder Ethyl, ist, R² unabhängig voneinander zweiwertiges C₁₋₆-Alkyl, bevorzugt C₁₋₄-Alkyl, insbesondere Methylen, Ethylen, n-Propylen, Isopropylen oder Butylen, ist, a 0, 1 oder 2 und b 1, 2 oder 3 ist, wobei a+b = 3. Die Alkylgruppen und/oder die Alkylengruppe können linear oder verzweigt sein. b ist bevorzugt 2 oder 3, besonders bevorzugt 3. Sofern a 2 ist, können die Gruppen R¹ gleich oder verschieden sein. Sofern b 2 oder 3 ist, können die zweiwertigen Alkylgruppen R² gleich oder verschieden sein.

Konkrete Beispiele für geeignete Aminverbindungen mit einer oder mehreren Hydroxygruppen sind Alkanolamine wie z.B. Triethanolamin, Diethanolamin, Ethanolamin, Diisopropanolamin, Triisopropanolamin, Diethanol-iso-propanolamin, Ethanol-diisopropanolamin, N-Methyl-diisopropanolamin, N,N,N',N'-Tetrakis(2-hydroxyethyl)ethylendiamin, N,N,N',N'-Tetrakis(2-hydroxypropyl)ethylenediamin, N-Methyldiethanolamin, N,N-Dimethylethanolamin, N,N-Diethylethanolamin. Insbesondere geeignet sind Diethanolamin, Triisopropanolamin, Triethanolamin, Diethanol-iso-propanolamin, Ethanol-diisopropanolamin, Diisopropanolamin, N-Methyl-diisopropanolamin. Besonders bevorzugt sind Triethanolamin und/oder Triisopropanolamin. Die Aminverbindung mit einer oder mehreren Hydroxygruppen ist am meisten bevorzugt Triisopropanolamin, womit eine deutlich verbesserte Festigkeitssteigerung und Feuchtereduktion erreicht wird.

In dem Estrichzusatzmittel liegt das Gewichtsverhältnis (a/c) von Fliessmittel (a) zu Aminverbindung (c) z.B. im Bereich von 10/1 bis 0,5/1, bevorzugt von 5/1 bis 1/1, besonders bevorzugt von 4/1 bis 1,5/1.

Wie bereits angeführt kann das Estrichzusatzmittel ohne Wasser vorliegen, enthält aber bevorzugt Wasser, so dass es bevorzugt als wässriges flüssiges Estrichzusatzmittel vorliegt. Die Anteile der vorstehend genannten Komponenten (a), (b) und (c) können abhängig vom Wassergehalt in einem breiten Bereich variieren.

Die nachstehend angegebenen geeigneten und bevorzugten Mengenanteile sind so zu verstehen, dass sie sowohl für die allgemeine Komponente als auch für die vorstehend genannten bevorzugten Ausführungsformen dieser Komponenten gelten. Die Angabe eines Mengenbereichs für die Komponente (c) (mindestens eine Aminverbindung mit einer oder mehreren Hydroxygruppen) bezieht sich z.B. immer sowohl für den Gesamtanteil an der Komponente (c) in dem Estrichzusatzmittel als auch bezüglich der bevorzugten Ausführungsformen für z.B. die Menge an Trialkanolamin oder die Menge an Triisopropanolamin, sofern eingesetzt.

Der Anteil der mindestens einen Aminverbindung, die ein oder mehrere Hydroxygruppen aufweist (c), in dem Estrichzusatzmittel liegt z.B. im Bereich von 2 Gew.-% bis 35 Gew.-%, bevorzugt 4 Gew.-% bis 20 Gew.-%, besonders bevorzugt 5 Gew.-% bis 12 Gew.-%, bezogen auf das Gesamtgewicht des Estrichzusatzmittels.

Der Anteil von Fliessmittel (a), insbesondere Polycarboxylatether, in dem Estrichzusatzmittel liegt z.B. im Bereich von 5 Gew.-% bis 90 Gew.-%, bevorzugt 12 Gew.-% bis 50 Gew.-%, besonders bevorzugt 15 Gew.-% bis 25 Gew.-%, bezogen auf das Gesamtgewicht des Estrichzusatzmittels.

Der Anteil von Luftporenbildner (b) in dem Estrichzusatzmittel liegt z.B. im Bereich von 0,01 Gew.-% bis 3 Gew.-%, bevorzugt 0,05 Gew.-% bis 2 Gew.-%, besonders bevorzugt 0,1 Gew.-% bis 1 Gew.-%, bezogen auf das Gesamtgewicht des Estrichzusatzmittels.

Der Gesamtanteil an Fliessmittel (a), Luftporenbildner (b) und Aminverbindung (c) kann z.B. im Bereich von 10 bis 100 Gew.-%, bevorzugt 15 bis 60 Gew.-%, bevorzugter 20 bis 50 Gew.-%, bezogen auf das Gesamtgewicht des Estrichzusatzmittels, liegen. Der Anteil an optionalem Wasser kann z.B. im Bereich von 0 bis 90 Gew.-%, bevorzugt 40 bis 85 Gew.-%, bevorzugter 50 bis 80 Gew.-%, bezogen auf das Gesamtgewicht des Estrichzusatzmittels, liegen.

Ein bevorzugtes Estrichzusatzmittel umfasst somit z.B., bezogen auf das Gesamtgewicht des Estrichzusatzmittels:
a) 5 Gew.-% bis 90 Gew.-%, bevorzugt 12 Gew.-% bis 50 Gew.-%, bevorzugter 15 Gew.-% bis 25 Gew.-% von einem oder mehreren Fliessmitteln, wobei das Fliessmittel bevorzugt Polycarboxylatether ist,
b) 0,01 Gew.-% bis 3 Gew.-%, bevorzugt 0,05 Gew.-% bis 2 Gew.-%, bevorzugter 0,1 Gew.-% bis 1 Gew.-% von einem oder mehreren Luftporenbildnern,
c) 2 Gew.-% bis 35 Gew.-%, bevorzugt 4 Gew.-% bis 20 Gew.-%, bevorzugter 5 Gew.-% bis 12 Gew.-%, von mindestens einer Aminverbindung, die ein oder mehrere Hydroxygruppen aufweist, und
d) 0 bis 90 Gew.-%, bevorzugt 40 bis 85 Gew.-%, bevorzugter 50 bis 80 Gew.-% Wasser.

Anders ausgedrückt enthält das Estrichzusatzmittel, bezogen auf den Feststoffgehalt, z.B.:
a) 50 Gew.-% bis 90 Gew.-%, bevorzugt 60 Gew.-% bis 80 Gew.-%, von einem oder mehreren Fliessmitteln, wobei das Fliessmittel bevorzugt Polycarboxylatether ist,
b) 0,1 Gew.-% bis 5 Gew.-%, bevorzugt 0,5 Gew.-% bis 3 Gew.-%, von einem oder mehreren Luftporenbildnern und
c) 5 Gew.-% bis 45 Gew.-%, bevorzugt 17 Gew.-% bis 37 Gew.-%, von mindestens einer Aminverbindung, die ein oder mehrere Hydroxygruppen aufweist,
wobei der Gesamtanteil an Fliessmittel (a), Luftporenbildner (b) und Aminverbindung (c) bzw. der Anteil an optionalem Wasser in dem Estrichzusatzmittel z.B. wie vorstehend angegeben sein kann.

Das Estrichzusatzmittel kann gegebenenfalls weitere Bestandteile umfassen, die auf dem Gebiet der Estriche üblich sind, wie z.B. Salze wie Calciumnitrat, pH-Einstellmittel, Antioxidationsmittel oder Konservierungsmittel. Der Gesamtanteil solcher optionalen weiteren Bestandteile, falls vorhanden, im Estrichzusatzmittel liegt z.B. bei nicht mehr 15 Gew.-%, bevorzugt nicht mehr als 10 Gew.-%.

Ein weiterer Aspekt der Erfindung betrifft ein Verfahren zur Herstellung eines Zementestrichs, umfassend
a) das Mischen von Komponenten umfassend Zement, Gesteinskörnung, Wasser und das erfindungsgemässe Estrichzusatzmittel wie vorstehend beschrieben, um eine Estrichmischung zu erhalten,
b) das Verteilen der Estrichmischung in die gewünschte Form und
c) das Härten der Estrichmischung.

Im ersten Schritt des Verfahrens werden Komponenten umfassend Zement, Gesteinskörnung, Wasser und das erfindungsgemässe Estrichzusatzmittel gemischt, um eine Estrichmischung zu erhalten. Die Reihenfolge, in der die Komponenten gemischt werden, ist beliebig. Bevorzugt gibt man jedoch das Estrichzusatzmittel nach dem Wasser zu. Weiterhin können die üblichen Mischvorschriften zur Herstellung solcher Zementmischungen eingesetzt werden.

Wie allgemein bekannt, ist Zement ein anorganisches, hydraulisch wirkendes Bindemittel. Bei Zugabe von Wasser bilden sich aus den Zementklinkerphasen Hydrate, wobei Wasser gebunden wird und der Zementleim sich unter Bildung des festen Zementsteins bzw. Zementprodukts verfestigt bzw. härtet.

Der Zement umfasst vorzugsweise Portlandzement. Zur Herstellung von Zement wird Klinker bzw. Zementklinker entweder allein oder mit weiteren Hauptbestandteilen und/oder bis zu 5 Gew.-% Nebenbestandteilen fein gemahlen. Zur Regelung des Erstarrens wird ferner Calciumsulfat (Gips und/oder Anhydrit) zugesetzt.

Als weitere Hauptbestandteile und/oder Nebenbestandteile zur Herstellung des Zements können latent hydraulische und/oder puzzolanische und/oder inerte Zusatzstoffe zugesetzt werden. Beispiele sind Hüttensandmehl, Puzzolane, wie getempertes Phonolith oder Trass, Flugaschen, gebrannter Ölschiefer, Kalksteinemehl und Silicastaub.

Zemente werden gemäss der Zusammensetzung klassifiziert. Hierfür existieren unterschiedliche, teilweise länderspezifische Normen, z.B. die DIN EN 197-1, in der die Zemente bezüglich des Anteils an Zementklinker und, falls vorhanden, der Art und Menge weiterer Hauptbestandteile klassifiziert werden.

Das Estrichzusatzmittel gemäss der Erfindung ist für alle Zementtypen geeignet, insbesondere für Portlandzement und Portlandkompositzemente, die neben Portlandzement z.B. mindestens einen weiteren Hauptbestandteil ausgewählt aus Hüttensandmehl, Silicastaub, Puzzolanen, Flugaschen, gebranntem Ölschiefer oder Kalksteine umfassen. Portlandkompositzemente sind bevorzugt.

Gemäss der Norm EN 197-1 handelt es sich daher bevorzugt um einen Zement vom Typ CEM I (Portlandzement) oder CEM II (Portlandkompositzement). Ein besonders geeigneter Zement ist ein Zement vom Typ CEM II/A oder CEM II/B, insbesondere vom Typ CEM II/A oder CEM II/B mit Kalksteinmehl der Klasse 42,5 R oder 42,5 N. Natürlich eignen sich auch entsprechende Zementtypen, die bezüglich einer anderen Norm klassifiziert sind.

Der eingesetzte Zement enthält bevorzugt kein Tonerdezement. Tonerdezement ist zum einen teuer, zum anderen erstarrt das System bei Zugabe von Tonerdezement zu Portlandzement viel zu schnell, so dass man extrem verzögern muss. Ausserdem schwindet eine Portland/Tonerdezement stark. Der eingesetzte Zement kann gegebenenfalls geringe Mengen an Tonerdezement enthalten, z.B. nicht mehr als 5 Gew.-%, bevorzugt nicht mehr als 1 Gew.-%, bezogen auf das Gesamtgewicht des Zements, was aber wie gesagt nicht bevorzugt ist.

Das Estrichzusatzmittel wurde bereits vorstehend beschrieben. Es wird vorzugsweise als wässriges flüssiges Estrichzusatzmittel zugesetzt. Wenn es als festes Produkt vorliegt, kann es in trockener Form zugesetzt werden.

Als Gesteinskörnung können die üblichen Materialien verwendet werden, wie z.B. Rundkorn oder gebrochene Sande und/oder Kies, wobei Gesteinskörnung bis 8 mm bevorzugt wird.

Die Estrichmischung kann neben den genannten Komponenten weitere übliche Zusatzmittel enthalten. Beispiele sind Korrosionsinhibitoren, Schwindreduzierer, Entschäumer oder Pigmente.

Die Estrichmischung kann z.B. ein Mörtel bis 4 mm Grösstkorn, oder ein Beton bis 8 mm Grösstkorn sein. Estriche werden auf Böden, wie z.B. Beton- oder Parkettböden, aufgebracht, um eine feste, ebene Basis zu bieten. Die Estrichmischung ist bevorzugt kein Fliessestrich.

Das Estrichzusatzmittel wird der Estrichmischung bevorzugt in einer solchen Menge zugesetzt, dass in der Estrichmischung 0,01 g bis 0,3 g, bevorzugter 0,02 g bis 0,15 g, der mindestens einen Aminverbindung, die eine oder mehrere Hydroxygruppen aufweist, pro 100 g Zement enthalten sind. Ferner enthält die Estrichmischung bevorzugt 0,04 g bis 0,4 g, bevorzugter 0,1 g bis 0,3 g, Fliessmittel pro 100 g Zement.

Die Menge an eingesetztem Estrichzusatzmittel beträgt bevorzugt 0,2 bis 2 Massen-%, bevorzugt 0,5 bis 1,5 Massen-%, bezogen auf den in der Estrichmischung enthaltenen Zement.

Die Menge an Wasser in der Estrichmischung kann in breiten Bereichen variieren, wobei die Menge an Wasser in der Estrichmischung vorzugsweise so gewählt wird, dass das Gewichtsverhältnis von Wasser zu Zement (w/z) im Bereich von 0,3 bis 0,8, bevorzugt 0,3 bis 0,6, besonders bevorzugt 0,3 bis nicht grösser als 0,47, liegt.

Nach Bildung der Estrichmischung wird sie durch Verteilen an der gewünschten Stelle in die gewünschte Form gebracht. Für die Herstellung eines Estrichs wird die Estrichmischung z.B. auf einen Boden aufgebracht bzw. verteilt. Dies kann gegebenenfalls auch das Glätten der Oberfläche der auf den Boden aufgebrachten Estrichmischung beinhalten. Durch die stattfindende Hydratationsreaktion erfolgt eine Härtung oder Verfestigung der Estrichmischung unter Bildung des Zementprodukts.

Durch das erfindungsgemässe Estrichzusatzmittel ist es möglich, einen Estrich herzustellen, der schon nach 3 Tagen Belegreife zeigt. Im Stand der Technik sind 28 d üblich. Ausserdem wird eine verbesserte Festigkeit, insbesondere Biegezugfestigkeit, erreicht.

In einem weiteren Aspekt betrifft die Erfindung die Verwendung des erfindungsgemässen Estrichzusatzmittels in einer Zement und Wasser enthaltenden Mischung als Trocknungsbeschleuniger oder als Beschleuniger der Belegreife oder zur Steigerung der Festigkeit des aus der Mischung enthaltenen Zementprodukts. Zusatzmittel, die eine gesteigerte Festigkeit bewirken, werden auch als Erhärtungsbeschleuniger bezeichnet. Mit der Festigkeit ist insbesondere die Druckfestigkeit gemeint. Die Zement und Wasser enthaltende Mischung ist bevorzugt ein Mörtel oder Beton und besonders bevorzugt ein Zementestrich.

Die beschleunigte Trocknung, die beschleunigte Belegreife und die gesteigerte Festigkeit der Zementmischung beziehen sich dabei auf eine Estrichmischung als Referenz, die der mit dem erfindungsgemässen Estrichzusatzmittel hergestellten Estrichmischung entspricht, ausser dass in dem Referenzsystem kein Estrichzusatzmittel verwendet wird. Die beschleunigte Trocknung, die beschleunigte Belegreife und die gesteigerte Festigkeit der Estrichmischung beziehen sich bevorzugter auf eine Estrichmischung als Referenz, die der mit dem erfindungsgemässen Estrichzusatzmittel hergestellten Estrichmischung entspricht, ausser dass das in dem Referenzsystem eingesetzte Estrichzusatzmittel wie das erfindungsgemässe Estrichzusatzmittel ist, aber ohne die Aminverbindung, die ein oder mehrere Hydroxygruppen aufweist.

Die folgenden Beispiele dienen zur weiteren Veranschaulichung der Erfindung, beschränken diese aber in keiner Weise.

### Beispiele

Im Folgenden bedeutet M.-% Massen-%. Folgende Rohstoffe wurden eingesetzt:

| VC 150 P | 40 %-ige Lösung von ViscoCrete^{®} -150 P in Wasser | Fliessmittel | Sika Schweiz AG |
|---|---|---|---|
| Sitren Airvoid^{®} 601 | Mischung anionischer Tenside, Feststoffgehalt ca. 35% | Luftporenbildner | Evonik Industries |
| Texapon NSO (Disponil) | Natriumlaurylethersulfat-Lösung, 27% | Luftporenbildner | BASF |
| Hansanyl^{®} OS 461 | Natriumolefin (C14-16)sulfonat, 37% | Luftporenbildner | Hansa Group AG |
| TEA | Triethanolamin | Erhärtungsbeschleuniger | |
| TIPA | Triisopropanolamin | Erhärtungsbeschleuniger | |

Für die Bewertung der Eigenschaften der Zementmischungen wurden folgende Messmethoden durchgeführt

### A) Frischmörteleigenschaften

### 1) Maximaler Luftporengehalt

Nach DIN EN 1015-7, 1998; Prüfverfahren für Mörtel für Mauerwerk; Teil 7: Bestimmung der Luftgehaltes von Frischmörtel; Verfahren A - Druckverfahren

### 2) Ausbreitmass (Hägermanntrichter)

Nach DIN EN 1015-3, 2004; Prüfverfahren für Mörtel für Mauerwerk; Teil 3: Bestimmung der Konsistenz von Frischmörtel

### 3) Dichte

Nach DIN EN 1015-6; 2007; Prüfverfahren für Mörtel für Mauerwerk; Teil 6: Bestimmung der Rohdichte von Frischmörtel; 7.2.1 Einfüllen und Verdichten durch Rütteln

### B) Festmörteleigenschaften

### Restfeuchte (Darr-Methode)

Gravimetrische Feuchtemessung, Trocknung bei 105°C im Trockenschrank (TS)

### 3) Biegezugfestigkeit und Druckfestigkeit

Nach DIN EN 13892-2, 2003; Prüfverfahren für Estrichmörtel und
Estrichmassen; Teil 2: Bestimmung der Biege- und Druckfestigkeit

### Beispiele Estrichzusatzmittel EZM 1 bis 5

Es wurden Estrichzusatzmittel EZM 1 bis 5 hergestellt. Die eingesetzten Zusammensetzungen sind in Tabelle 1 angeführt. Zur Herstellung wird VC-150 P40 M.-% in H2O vorgelegt, dann das Wasser und, sofern zugesetzt, die Amin-Komponente unter Rühren zugegeben. Bei Zugabe des Luftporenmittels sollte zu starkes Rühren vermieden werden (starke Schaumbildung). Alle Mischungen waren stabil.

**Tabelle 1**

| Nr. | EZM 1 | EZM 2 | EZM 3 | EZM 4 | EZM 5 |
|---|---|---|---|---|---|
| | Einwaage | Einwaage | Einwaage | Einwaage | Einwaage |
| | in g auf 100 g | in g auf 100 g | in g auf 100 g | in g auf 100 g | in g auf 100 g |
| VC 150 P 40 M.-% in H₂O | 50 | 50 | 50 | 50 | 50 |
| Sitren Airvoid 601 | 0,52 | | | | |
| Texapon NSO (Disponil) | | 0,5 | | | |
| Hansanyl OS 461 | | | 0,52 | 0,52 | 0,5 |
| TIPA | 7,8 | 7,8 | 7,8 | | |
| TEA | | | | 7,8 | |
| Wasser | 41,68 | 41,7 | 41,68 | 41,68 | 49,5 |
| Summe in g | 100 | 100 | 100 | 100 | 100 |

100 g VC 150 P (trocken) auf 55 kg Zement = 0,18 M.-% VC auf Zement

### Beispiele Estrichmischungen E 1 bis 6

Für die Herstellung von Estrichmischungen E1 bis E5 wurden vorstehend hergestellte Estrichzusatzmittel EZM 1 bis EZM 5 verwendet. Die Estrichmischung E 6 wurde als Referenz ohne Zusatzmittel zubereitet. Die Zusammensetzungen sind in Tabelle 2 angeführt.

Für die Herstellung der Estrichmischungen wurden folgende Produkte verwendet:

| | |
|---|---|
| CEM II/A-LL 42,5 R | CEM II/A-LL 42,5 R Fa. Allmendingen |
| GK über Sika FS 0/4 | Gesteinskörnung Flusssand 0/4 mm |
| GK über Sika FS 2/8 | Gesteinskörnung Flusssand 2/8 mm |
| GK über Bolay FS 0/2 | Gesteinskörnung Flusssand 0/2 mm |
| EZM 1 bis 5 | Estrichzusatzmittel wie vorstehend angegeben |
| Wasser | |

Die Einzelheiten zu den Zusammensetzungen der Estrichmischungen sind in Tabelle 2 aufgeführt. Die Mischung der Komponenten erfolgte nach folgendem Mischregime in Mischer nach EN 196-1:
- Trockene Gesteinskörnung vorlegen
- Zugabe vom 100 ml Wasser und 30 sec. Mischen
- Zugabe des Zementes (5 sec.)
- Zugabe ca. der Hälfte des Wassers (3 sec.)
- Zugabe des Estrichmittels (3 sec.)
- Zugabe des restlichen Wassers (3 sec.)
- Gesamtmischzeit ab Zugabe des Zementes (40 sec.)

Eigenschaften der erhaltenen Mischungen wurden gemäss den vorstehend genannten Messverfahren geprüft. Die Ergebnisse sind ebenfalls in Tabelle 2 aufgeführt.

**Tabelle 2**

| Nr. | | E1 | | E2 | | E3 3 | | E4 | | E5 | | E6 | |
|---|---|---|---|---|---|---|---|---|---|---|---|---|---|
| | | Einwaage in | | Einwaage in | | Einwaage in | | Einwaage in | | Einwaage in | | Einwaage in | |
| | | M.-% | g | M.-% | g | M.-% | g | M.-% | g | M.-% | g | M.-% | g |
| | | 100,0 | 4000 | 100,0 | 4000 | 100,0 | 4000 | 100,0 | 4000 | 100,0 | 4000 | 100,0 | 4000 |
| CEM II/A-LL 42,5 R | | 16,7 | 668 | 16,7 | 668 | 16,7 | 668 | 16,7 | 668 | 16,7 | 668 | 16,7 | 668 |
| GK über Bolay | FS 0/2 | 10 | 400 | 10 | 400 | 10 | 400 | 10 | 400 | 10 | 400 | 10 | 400 |
| GK über Sika | FS 0/4 | 45 | 1800 | 45 | 1800 | 45 | 1800 | 45 | 1800 | 45 | 1800 | 45 | 1800 |
| GK über Sika | FS 2/8 | 28,1 | 1124 | 28,1 | 1124 | 28,1 | 1124 | 28,1 | 1124 | 28,1 | 1124 | 28,3 | 1132 |
| Airvoid - TIPA | EZM 1 | 0,1503 | 6,01 | | | | | | | | | | |
| Texapon - TIPA | EZM 2 | | | 0,1503 | 6,01 | | | | | | | | |
| Hansanyl - TIPA | EZM 3 | | | | | 0,1503 | 6,01 | | | | | | |
| Hansanyl - TEA | EZM 4 | | | | | | | 0,1503 | 6,01 | | | | |
| Hansanyl | EZM 5 | | | | | | | | | 0,1503 | 6,01 | | |
| Wassereinwaaqe in g | | | 300 | | 300 | | 300 | | 300 | | 300 | | 380 |
| w/z-Wert: | | | 0,45 | | 0,45 | | 0,45 | | 0,45 | | 0,45 | | 0,57 |
| Ausbreitmass in mm | | 147 | | 138 | | 140 | | 140 | | 145 | | 149 | |
| Dichte in kg/dm³ | | 2,192 | | 2,267 | | 2,174 | | 2,184 | | 2,154 | | 2,352 | |
| LP-Gehalt in Vol.-% | | 9,0 | | 7,0 | | 10,5 | | 10,5 | | 11,0 | | 1,5 | |
| Verteilen | | Leicht | | Leichter als E1 | | Wie E2 | | Sehr leicht | | leicht | | Sehr leicht | |
| Verdichten | | Gut | | Sehr gut | | Gut | | Gut | | Gut | | Sehr gut | |
| Glätten direkt | | Etwas trocken | | Besser als E1 | | Wie E2 | | Gut | | Etwas trocken | | Sehr gut | |
| Glätten nach 30 min | | Immer noch möglich | | Immer noch möglich | | Immer noch möglich | | Viel Schlempe | | Immer noch möglich | | Immer noch möglich | |
| Festmörteleigenschaft nach 3 Tagen | | | | | | | | | | | | | |
| Restfeuchte in M.-% | | | | 1,9 | | 1,85 | | 2,05 | | 2,05 | | 3,5 | |
| Biegezugfestigkeit in MPa | | 7,55 | | 6,95 | | 6,6 | | 5,9 | | 6,7 | | 5,4 | |
| Druckfestigkeit in MPa | | 50,0 | | 49,8 | | 43,6 | | 41,7 | | 33,8 | | 28,2 | |

Das Estrichzusatzmittel wurde mit ca. 0,9 M.-% bezogen auf Zement zugeben. Ein gravierender Unterschied beim Austausch der Luftporenbildner ist in Bezug auf die Verarbeitung nicht zu beobachten.

Zur Bestimmung der Restfeuchte mit der Calciumcarbid-Methode wurde der Frischmörtel zuvor in eine Plastikschale mit einer Aufbauhöhe von 4,5 cm gefüllt. Die Lagerung erfolgte bei 17°C und 55 bis 60 % rel. Feuchte.

Bei den Festmörteleigenschaften treten deutliche Unterschiede auf. Bei Verwendung von Aminen beobachtet man eine enorme Festigkeitssteigerung nach 3 Tagen. Dabei ist TIPA etwas besser als TEA. Die Festigkeitssteigerung nach 3 Tagen mit TIPA fällt mit 22 % sehr deutlich aus.

Die Restfeuchte-Werte fügen sich sehr gut in die Resultate der Festigkeitswerte. Bei Einsatz von TIPA liegen die Feuchte-Werte 10 % niedriger. Während die Versuche E 4 und E 5 über der Grenze von 2 M.-% Restfeuchte liegen (TEA, ohne), haben die Versuche E 2 und E 3 deutlich weniger als 2,0 M.-%. Die Differenz von 0,2 M.-% Feuchte erscheint auf den ersten Blick niedrig; man hat jedoch die Belegreife nach 3 Tagen erreicht, wobei man bei den anderen Versuchen ohne TIPA erst nach 5 oder 7 Tagen weiter arbeiten kann. Eigene Erfahrungen auf Baustellen bestätigen, dass 0,2 % geringere Feuchte schon einen entscheidenden Vorteil bedeutet.

Der Nullversuch (kein Estrichzusatzmittel) konnte in den Verarbeitungseigenschaften überzeugen; obwohl nur 1,5 Vol.-% Luft enthalten ist, ist dieser Mörtel sehr leicht zu verarbeiten. Die Biegezugfestigkeiten des Nullversuchs sind immer noch in den Sollwerten (wenig Luft) und die Druckfestigkeiten etwas (15 %) reduziert, aber immer noch in Ordnung. Die Restfeuchte ist nach 3 Tagen mit 3,5 M.-% mit CM deutlich zu hoch.

Zusammenfassend ist festzustellen, dass kaum Unterschiede in der Verarbeitung bei Verwendung von verschiedenen Luftporenmitteln festzustellen sind. Biegezugfestigkeiten zeigen bei diesen Versuchen wie auch prinzipiell sehr starke Schwankungen, so dass die erhaltenen Werte eine geringe Aussagekraft besitzen.

TIPA führt zur deutlichen Beschleunigung der Zementhydratation und ist somit geeignet sowohl als Additiv zur Festigkeitssteigerung als auch als Additiv zur Feuchtereduktion. TEA führt zu einer verbesserten Druckfestigkeit.

### Feldversuche

Von dem vorstehend hergestellten Estrichzusatzmittel EZM 2 (TIPA + Texapon) wurden 5 Liter angemischt und in anwendungstechnischen Versuchen getestet. Das Estrichzusatzmittel Nr. EZM 2 wird für die Feldversuche als Sika V2-4 bezeichnet.

Das erfindungsgemässe Estrichzusatzmittel Sika V2-4 wurde in einem CEM II Zement untersucht und mit kommerziellen Estrichzusatzmittel verglichen. Zu Vergleichszwecken wurden auch Estriche auf Basis von CEM I hergestellt. Wegen des höheren Anteils von Portlandzement in CEM I weisen solche Zemente eine kürzere Austrocknungszeit als Zemente vom Typ CEM II auf.

Die Versuche erfolgten mit folgendem Schema:
Grundmischung Estrichpumpe: Annahme: 300 kg Sand, 50 kg Zement
Konsistenzbereich: steif plastisch
Sieblinie eher grobkörnig A 8.
Sandfeuchte: ca. 5 %
Einsatzmenge Zement 50 kg/200 - Mischung

### Mischregime:

Teilmenge Sand vorlegen, Zement aufgeben, Wasser mit Zusatzmittel zugeben, restliche Sandmenge auffüllen bis 200 l Mischer voll.
Dann 30 Sekunden Mischzeit bis zum Pumpvorgang Folgende kommerzielle Zusatzmittel als Beschleuniger für Estriche wurden zu Vergleichszwecken untersucht:

| | |
|---|---|
| Plastifizierer Bayern Chemie | Bayern Chemie |
| ViscoCrete^{®} -150 P | Sika Schweiz AG |
| Retanol Xtreme^{®} | PCT Performance Chemicals GmbH |
| Contopp^{®} 10 | Knopp GmbH Chemische Produkte |

Aufteilung der Versuchsfläche:

| | | | |
|---|---|---|---|
| M1 | M3 | M5 | |
| Nullversuch | CEM I | Nullversuch | |
| CEM I | Bayern Chemie | CEM II | |
| 20 I | 10 I | 20 I | |
| M2 | M4 | M6 | |
| Nullversuch | CEM I | Nullversuch | |
| CEM II | Bayern Chemie | CEM II | |
| 20 I | 11 I | 20 I | |
| | M11 | M13 | M15 |
| | CEM I | CEM II | CEM II |
| | Retanol Xtreme | Contopp 10 | Sika V2-4 |
| | 9 I | 9 I | 8 I |
| | M12 | M14 | M16 |
| | CEM II | CEM II | CEM II |
| | Retanol Xtreme | Contopp 10 | Sika V2-4 |
| | 8 I | 10 I | 9 I |

Breite der Einzelabschnitte 2 m; Fläche ist mit Dämmlage und Folie ausgelegt.

In nachfolgender Tabelle 3 sind die im Feldtest untersuchten Materialien näher charakterisiert.

**Tabelle 3**

| Misch-Nr. | Zusammensetzung | Bemerkung |
|---|---|---|
| 1 | CEM I 42,5 N mit 20 I Wasser | Abziehen OK, Wasser kommt an die Oberfläche, leichtes bluten; schwer mit der Maschine zu glätten |
| 2 | CEM I 42,5 N | Wie vor; Luft 2,8 % |
| | mit 20 I Wasser | |
| 3 | CEM I 42,5 N mit 70 ml Plastifizierer Bayern Chemie mit 10 I Wasser | Standardmischung des Estrichlegers; gute Pumpfähigkeit und gut abzuziehen. Mittel wird immer zugesetzt um das maschinelle Glätten zu erleichtern; Mischung war allerdings zu trocken |
| 4 | CEM I 42,5 N mit 70 ml Plastifizierer Bayern Chemie mit 11 I Wasser | Wie vor jedoch Zugabewasser auf 11 I angehoben Luft 4,7% |
| 5 | CEM II A-LL 32,5 R Mit 20 I Wasser | Abziehen OK, etwas geschmeidiger, Wasser kommt an die Oberfläche, leichtes bluten; schwer mit der Maschine zu glätten |
| 6 | CEM II A-LL 32,5 R Mit 20 I Wasser | Wie vor; Wasseranspruch zum CEM I vergleichbar, Luft 3,6 % |
| 11 | CEM II A-LL 32,5 R mit 0,4 I Retanol Xtreme (PCT) Mit 9 I Wasser | Etwas zu weich, Zugabewasser um 1 I reduzieren |
| 12 | CEM II A-LL 32,5 R mit 0,4 I Retanol Xtreme Mit 8 I Wasser | Verarbeitung OK jedoch unangenehme Geruchsentwicklung (wurde von Verarbeitern unabhängig voneinander wahrgenommen) |
| 13 | CEM II A-LL 32,5 R mit 0,5 I Contopp 10 (Knopp) Mit 9 I Wasser | Zu trocken, Anmachwasser um 1 I erhöhen |
| 14 | CEM II A-LL 32,5 R mit 0,5 I Contopp 10 (Knopp) Mit 10 I Wasser | Sehr schwer abzuziehen, Mischung ist klebrig, deutlich schlechter als Mischung 4 |
| 15 | CEM II A-LL 32,5 R mit 0,45 I Sika V2-4 Mit 8 I Wasser | Etwas zu trocken, Anmachwasser um 1 I erhöhen |
| 16 | CEM II A-LL 32,5 R mit 0,45 I Sika V2-4 Mit 9 I Wasser | Gute Konsistenz zum Abziehen und Glätten, vergleichbar mit Mischung 4 |

Einige der erhaltenen Proben wurden auf ihre Eigenschaften näher untersucht. Die Ergebnisse sind in nachfolgender Tabelle 4 gezeigt.

Für den Test am Festmörtel gilt: Je Mischung wurden 6 Prismen eingeschlagen, die Festigkeiten werden nach 24 Stunden, 2, 3, 7, 14 und 28 Tagen ermittelt. Die CM-Messungen beginnen nach 24 Stunden.

Die beiden Estrichzemente M15 und M16 mit dem erfindungsgemässen Estrichzusatzmittel Sika V2-4 sind in der Verarbeitung mindestens vergleichbar zur Referenzmischung 4. Im Vergleich zu den kommerziellen flüssigen Zusatzmitteln, die als Trocknungsbeschleuniger beworben werden, erzielt Sika V2-4 die beste Bewertung. Der Plastifizierer von Bayernchemie war die Benchmark für die Verarbeitung und wurde von den Estrichzementen mit dem erfindungsgemässen Estrichzusatzmittel auf jeden Fall erreicht.

**Tabelle 4**

| **Mischung** | **M1** | **M4** | **M6** | **M11** | **M12** | **M14** | **M16** |
|---|---|---|---|---|---|---|---|
| Wasser kg/m3 | 214 | 192 | 216 | 172 | 170 | | 169 |
| w/z | 0,693 | 0,621 | 0,699 | 0,557 | 0,550 | 0,000 | 0,547 |
| LP | 2,8 | 4,7 | 3,6 | 4,5 | 3,4 | | 5,2 |
| Dichte kg/m3 | 2,259 | 2,261 | 2,262 | 2,303 | 2,317 | | 2,271 |
| Feuchte gemessen mit Darr-Methode | | | | | | | |
| Feuchte TS 105°C | 6,89 | 5,74 | 8,01 | 5,01 | 4,63 | 4,68 | 4,35 |
| Feuchte TS 105°C | 6,87 | 5,57 | 7,06 | 5,42 | 4,6 | 5,11 | 4,91 |
| Feuchte TS 105°C | 6,68 | 5,41 | 7,05 | 4,39 | 5,47 | | 4,86 |
| Feuchte TS 105°C 7 d | 5,43 | 4,03 | 5,66 | 3,71 | 3,24 | | 3,59 |
| Feuchte TS 105°C 16 d | 5,28 | 3,75 | 4,69 | 3,57 | 3,16 | | 3,47 |
| Feuchte TS 105°C 28 d | | | | | | | |
| | | | | | | | |

| **Mischung** | **M1** | **M4** | **M6** | **M11** | **M12** | **M14** | **M16** |
|---|---|---|---|---|---|---|---|
| Biegezug MPa | | | | | | | |
| Biegezug 1 d | 1,7 | 3,2 | 2,1 | 4,3 | 4,1 | | 4,5 |
| Biegezug 2 d | 3,2 | 3,5 | 3,2 | 6 | 6 | | |
| Biegezug 3 d | 3,5 | 5,4 | 4 | 6,5 | 6,8 | | 6,4 |
| Biegezug 7 d | 3,3 | 5,1 | 4 | 6,4 | 8 | | 6,9 |
| Biegezug 16 d | 3,8 | | 5,1 | 8 | 8 | | 6,9 |
| Biegezug 28 d | 4,6 | 7,7 | 6,5 | 8,8 | 7,4 | | 7,9 |
| Druckfestigkeit MPa | | | | | | | |
| Druckfestigkeit 1 d | 6,4 | 16 | 6,4 | 19,2 | 18,5 | | 21,1 |
| Druckfestigkeit 2 d | 11,6 | 19,5 | 11,2 | 26,7 | 27,7 | | 31,4 |
| Druckfestigkeit 3 d | 14 | 26,1 | 13,9 | 33,8 | 34 | | 32,8 |
| Druckfestigkeit 7 d | 19,6 | 34,7 | 19 | 39,5 | 42 | | 45,3 |
| Druckfestigkeit 16 d | 27,3 | | 27,4 | 56,9 | 57,8 | | 54,3 |
| Druckfestigkeit 28 d | 27,7 | 46,3 | 29,1 | 51,4 | 52,5 | | 54,7 |

## Patentansprüche

1. Estrichzusatzmittel, umfassend
a) ein oder mehrere Fliessmittel,
b) einen oder mehrere Luftporenbildner und
c) mindestens eine Aminverbindung, die eine oder mehrere Hydroxygruppen aufweist.

2. Estrichzusatzmittel nach Anspruch 1, ferner umfassend d) Wasser.

3. Estrichzusatzmittel nach Anspruch 1 oder Anspruch 2, wobei die mindestens eine Aminverbindung ausgewählt ist aus Monoalkanolaminen, Dialkanolaminen, Trialkanolaminen oder Mischungen davon.

4. Estrichzusatzmittel nach irgendeinem der Ansprüche 1 bis 3, wobei die mindestens eine Aminverbindung ausgewählt ist aus Triethanolamin, Triisopropanolamin oder einer Mischung davon, wobei Trisopropanolamin bevorzugt ist.

5. Estrichzusatzmittel nach irgendeinem der Ansprüche 1 bis 4, wobei das Fliessmittel ausgewählt ist aus Lignosulfonaten, Naphthalinsulfonsäure-Formaldehyd-Kondensatharzen, Melamin-/Naphthalinsulfonaten, Melamin-Formaldehyd-Sulfit-Kondensatharzen, Polycarboxylatethern oder Mischungen davon, wobei das Fliessmittel bevorzugt ein Polycarboxylatether ist.

6. Estrichzusatzmittel nach irgendeinem der Ansprüche 1 bis 5, wobei der Luftporenbildner ausgewählt ist aus Tensiden, Harzseifen oder Mischungen davon, wobei der Luftporenbildner bevorzugt ein Tensid ist.

7. Estrichzusatzmittel nach irgendeinem der Ansprüche 1 bis 6, wobei das Gewichtsverhältnis (a/c) von Fliessmittel (a) zu Aminverbindung (c) im Bereich von 10/1 bis 0,5/1, bevorzugt von 5/1 bis 1/1, besonders bevorzugt von 4/1 bis 1,5/1, liegt.

8. Estrichzusatzmittel nach irgendeinem der Ansprüche 1 bis 7, wobei der Anteil der mindestens einen Aminverbindung im Bereich von 2 Gew.-% bis 35 Gew.-%, bevorzugt 4 Gew.-% bis 20 Gew.-%, besonders bevorzugt 5 Gew.-% bis 12 Gew.-%, bezogen auf das Gesamtgewicht des Estrichzusatzmittels, liegt.

9. Estrichzusatzmittel nach irgendeinem der Ansprüche 1 bis 8, wobei der Anteil des einen oder der mehreren Fliessmittel, insbesondere Polycarboxylatether, im Bereich von 5 Gew.-% bis 90 Gew.-%, bevorzugt 12 Gew.-% bis 50 Gew.-%, besonders bevorzugt 15 Gew.-% bis 25 Gew.-%, bezogen auf das Gesamtgewicht des Estrichzusatzmittels, liegt.

10. Estrichzusatzmittel nach irgendeinem der Ansprüche 1 bis 9, wobei der Anteil des einen oder der mehreren Luftporenbildner im Bereich von 0,01 Gew.-% bis 3 Gew.-%, bevorzugt 0,05 Gew.-% bis 2 Gew.-%, besonders bevorzugt 0,1 Gew.-% bis 1 Gew.-%, bezogen auf das Gesamtgewicht des Estrichzusatzmittels, liegt.

11. Verfahren zur Herstellung eines Zementestrichs umfassend
a) das Mischen von Komponenten umfassend Zement, Gesteinskörnung, Wasser und ein Estrichzusatzmittel nach irgendeinem der Ansprüche 1 bis 10, um eine Estrichmischung zu erhalten,
b) Verteilen der Estrichmischung in die gewünschte Form und
c) Härten der Estrichmischung.

12. Verfahren nach Anspruch 11, wobei das Estrichzusatzmittel in einer solchen Menge zugemischt wird, dass in der Estrichmischung 0,01 g bis 0,3 g, bevorzugt 0,02 g bis 0,15 g, der mindestens einen Aminverbindung pro 100 g Zement enthalten sind.

13. Verwendung eines Estrichzusatzmittels nach irgendeinem der Ansprüche 1 bis 10 in einer Zement und Wasser enthaltenden Mischung als Trocknungsbeschleuniger oder als Beschleuniger der Belegreife des aus der Mischung enthaltenen Zementprodukts.

14. Verwendung eines Estrichzusatzmittels nach irgendeinem der Ansprüche 1 bis 10 in einer Zement und Wasser enthaltenden Mischung als Erhärtungsbeschleuniger.

15. Verwendung nach Anspruch 13 oder Anspruch 14, wobei die Zement und Wasser enthaltende Mischung ein Zementestrich ist.
